Europäisches Patentamt

European Patent Office

Office européen des brevets

(19)

(11) Veröffentlichungsnummer: **0 097 878**

**A2**

(12) **EUROPÄISCHE PATENTANMELDUNG**

(21) Anmeldenummer: **83105875.5**

(22) Anmeldetag: **15.06.83**

(51) Int. Cl.³: **B 60 H 1/00**
**G 05 G 7/04**

(30) Priorität: **28.06.82 DE 3224044**

(43) Veröffentlichungstag der Anmeldung:
**11.01.84 Patentblatt 84/2**

(84) Benannte Vertragsstaaten:
**BE DE FR GB IT NL SE**

(71) Anmelder: **SIEMENS AKTIENGESELLSCHAFT**
**Berlin und München Wittelsbacherplatz 2**
**D-8000 München 2(DE)**

(72) Erfinder: **Hildebrand, Reinhard**
**Hauptstrasse 11**
**D-8627 Redwitz(DE)**

(72) Erfinder: **Riedel, Friedrich**
**Untere Dorfstrasse 44**
**D-8627 Redwitz(DE)**

(54) **Steuergerät für Heizungs- und Lüftungsanlagen in Kraftfahrzeugen.**

(57) Bei einem Steuergerät für Heizungs- und Lüftungsanlagen in Kraftfahrzeugen mit einem Stellhebel und gegebenenfalls einem Betätigungshebel ist erfindungsgemäß im Stellhebel (1) eine Führung (4) eingebracht, in der eine in einer Führungsnut von bestimmter Kennlinie (Charakteristik) bewegliche Führungsrolle (5) mit einem Übertragungselement (6) angeordnet ist. Die Führungsnut kann im Grundkörper (7) oder in einem Zusatzteil (11) eingebracht sein.

FIG 1

EP 0 097 878 A2

Croydon Printing Company Ltd.

sehr aufwendig und besteht aus vielen Einzelteilen. Der Bewegungsablauf der Übertragungselemente ist durch eine einmal gewählte Konstruktion festgelegt.

Der Erfindung liegt die Aufgabe zugrunde, den Weg eines Betätigungshebels in den Weg eines Übertragungselementes umzusetzen, das ein Stellglied, beispielsweise eine Luftklappe, einen elektrischen Widerstand oder eine Spule ansteuert. Dabei soll der Wegeverlauf des Übersetzungselementes gegenüber dem Weg des Betätigungshebels je nach Anforderung variiert werden können. Ein zusätzlicher Kulissenhebel soll entfallen.

Diese Aufgabe wird dadurch gelöst, daß erfindungsgemäß der gegebenenfalls durch einen Betätigungshebel betätigte Stellhebel eine Führung aufweist, die eine in einer Führungsnut bestimmter Kennlinie bewegbare Führungsrolle mit einem Übertragungselement aufnimmt. Der Verlauf der Führungsnut ist so ausgelegt, daß die vorgegebenen Stellwege über die Führungsrolle und das Übertragungselement erfüllt sind. Mit einer Ausführung gemäß der Erfindung kann die Führungsnut variiert werden und es ist für beispielsweise die Heizungskennlinie ein progressiver Bewegungsverlauf des Übertragungselementes möglich. Dies ist besonders vorteilhaft.

Durch die Führungsnut 4, die vorteilhafter Weise im Grundkörper 7 angeordnet ist, wird eine Führungsrolle 5, beispielsweise ein Schlitten oder eine runde Scheibe, geführt. Die Führungsnut 9 kann durch ein Zusatzteil 11 gebildet sein.

SIEMENS AKTIENGESELLSCHAFT
Berlin und München

Unser Zeichen
VPA 82 P 3 1 8 0 E

Steuergerät für Heizungs- und Lüftungsanlagen
in Kraftfahrzeugen

Die Erfindung betrifft ein Steuergerät für Heizungs-
und Lüftungsanlagen in Kraftfahrzeugen bestehend aus
einem Kunststoffgrundkörper und mindestens einem
Stellhebel. Derartige Vorrichtungen befinden sich
überwiegend am Armaturenbrett von Kraftfahrzeugen.

In Kraftfahrzeugen kann gemäß einer bekannten Vorrichtung eine Regeleinrichtung mittels eines Bowdenzuges betätigt werden, wobei für die zwangsläufige
Übertragung der Stellbewegung zwischen dem Betätigungsknopf und dem Befestigungspunkt des Bowdenzuges eine Hebelvorrichtung vorgesehen ist, die zwei
Teile enthält, nämlich ein um eine feste Achse schwenkbares, das über eine Gleit- und gegebenenfalls Schwenkverbindung verbunden ist mit dem weiteren Teil. Der
Befestigungspunkt des Bowdenzuges ist an einem der
beiden Teile vorgesehen. Der Betätigungsknopf ist
an dem anderen Teil angebracht (DE-PS 16 55 102).
Es sind die Betätigungskräfte entweder nicht über
den gesamten Hub gleichmäßig und demzufolge keine
gleichmäßig leichte Bewegung des Stellhebels möglich
oder es beruht der Übergang vom Stell- zum Betätigungshebel auf dem Prinzip der Linienberührung, woraus ein
erhöhter Verschleiß resultiert. Gemäß der DE-OS
28 52 452 ist der Stellhebel für Lüftungsanlagen
in Kraftfahrzeugen beidseitig zwischen sich in
Stellrichtung erstreckenden Führungsflächen geführt.
Die technische Ausgestaltung der Vorrichtung ist

Td 2 Hag / 23.6.1982

Der Stellhebel 1 bewirkt den Antrieb der Führungsrolle 5. Die Führungsnut 9 bestimmt den Bewegungsablauf. Durch die Führung der Führungsrolle 5 in
der Nut 9 wird eine direkte Übertragung des Stellweges des Betätigungshebels 2 in den Stellweg des
Übertragungselementes 6 gewährleistet. Durch ein
an der Führungsrolle 5 angebrachtes Bauteil, das
in eine Führungsnut 9 eingreift, wird dem Übertragungselement 6 der gewünschte Weg gegeben. Die
Führungsnut 9 kann im Grundkörper 7 integriert sein
oder in einem Zusatzteil 11 eingebracht sein.

Gemäß einer bevorzugten Ausführungsform der Erfindung ist die Führungsrolle 5 mit dem Zapfen 10 versehen. Dieser greift in die Führungsnut ein, die im
Grundkörper 7 oder in einem Zusatzteil 11 angebracht
sein kann.Bei letzterer Ausführungsform ist das Zusatzteil am Grundkörper 7 befestigt.

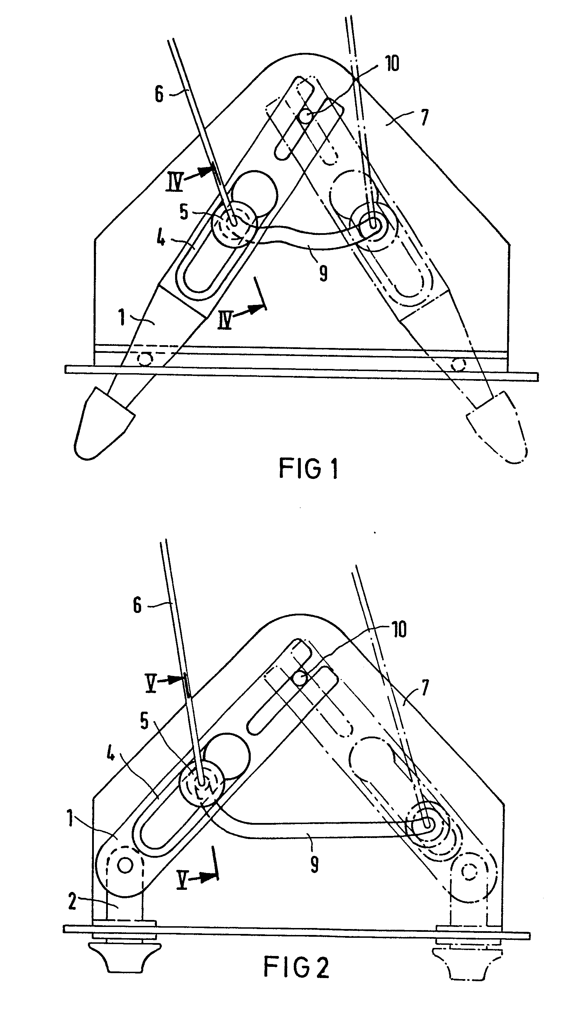

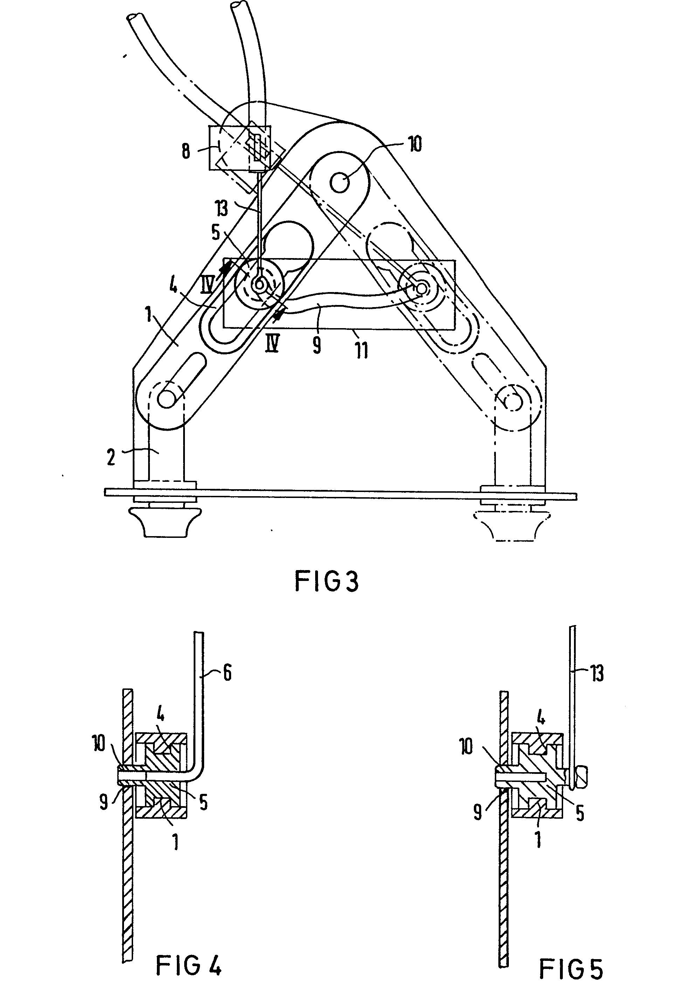

Die Führungsrolle 5 kann auch ein Zusatzteil 11 aufnehmen, beispielsweise einen Bowdenzug 13 oder ein
Gestänge 6. Durch die Verwendung eines Gestänges
können direkt Stellglieder, z.B. Luftklappen, angesteuert werden. Bei Verwendung eines Bowdenzuges
ist zusätzlich noch eine drehbar gelagerte Bowdenzugaufnahme 8 in den Grundkörper einzubringen oder
im Grundkörper zu lagern (Figuren 2 und 3).

Vorrichtungen gemäß der Erfindung eignen sich besonders
als Steuerelemente für Luftklappen, elektrische Widerstände und Spulen.

Die Erfindung wird anhand der Zeichnung näher erläutert. Es zeigen

Figuren 1 bis 3 Draufsichten von erfindungsgemäßen Vorrichtungen.

Figur 4 einen Schnitt längs der Linie IV-IV der Ausführungen nach Figur 1 und Figur 2.

Figur 5 einen Schnitt längs der Linie V-V  der Ausführung nach Figur 3.

Figur 6 eine erfindungsgemäße Kennlinie.

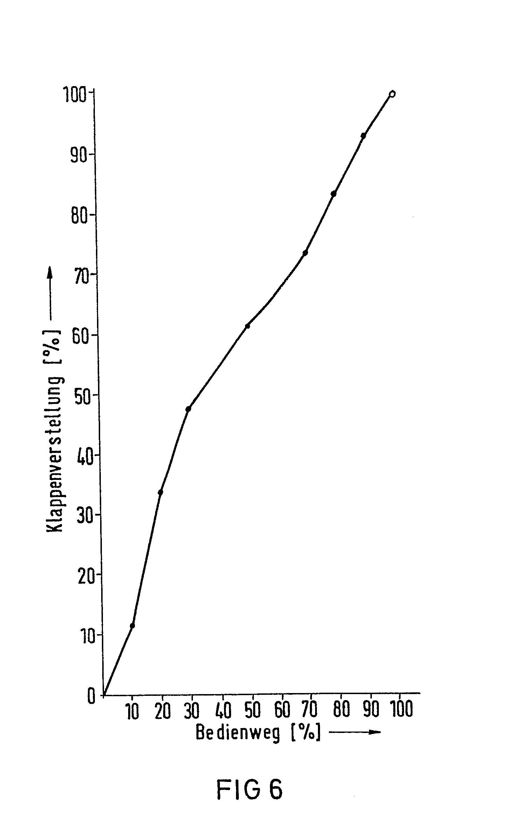

Die Vorrichtung nach Figur 1 hat einen Stellhebel 1 der direkt betätigt wird. Der Stellhebel weist eine Führungsschiene 4 auf, in welcher die Führungsrolle 5 verschiebbar gelagert ist. An der Führungsrolle ist das Übertragungselement 6 befestigt. Ein auf der Führungsrolle 5 angebrachter nach unten weisender Zapfen greift in die Führungsnut 9 ein und wird in dieser bewegt. Der Verlauf der Führungsnut wird so gestaltet, daß eine vorgegebene Kennlinie wie z.B. Figur 5 erreicht wird. Die Führungsnut befindet sich im Grundkörper 7. Ausführungsformen nach den Figuren 2 und 3 weisen zusätzlich noch einen Betätigungshebel 2 auf. Gemäß Figur 3 ist die Führungsnut 9 in einem Zusatzteil 11 angeordnet. Mit 13 ist der Bowdenzug bezeichnet.

Figur 4 zeigt die Führungsrolle 5 der Figur 1 im Schnitt IV-IV.Der auf der Unterseite der Führungsrolle 5 angebrachte Zapfen ist mit 10 bezeichnet und das Übertragungselement ein Gestänge mit 6. Die Führungsnut bestimmt den Bewegungsablauf, der Stellhebel bewirkt den Antrieb der Führungsrolle.

Figur 5 zeigt die Führungsrolle 5 der Figur 2 im Schnitt II-II. Das Übertragungselement ist ein Bowdenzug 13, dessen Öse an einem Dorn befestigt ist.

In Figur 5 ist als Beispiel eine Kennlinie für eine erfindungsgemäße Vorrichtung aufgezeichnet, die den Zusammenhang von Bedienweg und Klappenverstellung graphisch darstellt. Auf der Abszisse ist der Bedienweg und auf der Ordinate die Klappenverstellung jeweils in Prozent aufgetragen. Bei der gemäß der Erfindung ausgestalteten Führungsnut wird eine stufenlose Steuerung von beispielsweise der Heizleistung, der Luftzufuhr oder des elektrischen Widerstandes erreicht, wobei eine Abhängigkeit zwischen dem Bedienweg und beispielsweise der Heizleistung oder dem Widerstand besteht (vergleiche Figur 6).

8 Patentansprüche
6 Figuren

Patentansprüche

1. Steuergerät für Heizungs- und Lüftungsanlagen in Kraftfahrzeugen bestehend aus einem Kunststoffgrundkörper mit mindestens einem Stellhebel, d a d u r c h   g e k e n n z e i c h n e t , daß der gegebenenfalls durch einen Betätigungshebel (2) betätigte Stellhebel (1) eine Führung (4) aufweist, die eine in einer Führungsnut (9) bestimmter Kennlinie bewegbare Führungsrolle (5) mit einem Übertragungselement (6) aufnimmt.

2. Steuergerät nach Anspruch 1, d a d u r c h   g e k e n n z e i c h n e t , daß der Verlauf der Führungsnut (9) so ausgelegt ist, daß die vorgegebenen Stellwege über die Führungsrolle (5) und das Übertragungselement (6) erfüllt sind.

3. Steuergerät nach Anspruch 1 und 2, d a d u r c h   g e k e n n z e i c h n e t , daß die Führungsnut (9) im Grundkörper (7) eingebracht ist.

4. Steuergerät nach Anspruch 1 und 2, d a d u r c h   g e k e n n z e i c h n e t , daß die Führungsnut (9) in einem Zusatzteil (11) angebracht ist.

5. Steuergerät nach Anspruch 1 bis 4, d a d u r c h   g e k e n n z e i c h n e t , daß das Übertragungselement ein Gestänge (6) ist.

6. Steuergerät nach Anspruch 1 bis 4, d a d u r c h   g e k e n n z e i c h n e t , daß das Übertragungselement ein Bowdenzug (13) ist.

7. Steuergerät nach Anspruch 1 bis 6, d a d u r c h
g e k e n n z e i c h n e t ,   daß die Führungsrolle
(5) mit einem Zapfen (10) versehen ist.

8. Steuergerät nach Anspruch 1 bis 7, d a d u r c h
g e k e n n z e i c h n e t ,   daß die Längsachse
des Zwischenhebels (3) mit der Führungsebene (12)
des Betätigungshebels (2) einen Winkel von 90 $\pm$ 10$^{\circ}$
bildet.

FIG 1

FIG 2

FIG 3

FIG 4

FIG 5

FIG 6